# EUROPÄISCHE PATENTSCHRIFT

(11) **EP 1 217 420 B1**
(45) Veröffentlichungstag und Bekanntmachung des Hinweises auf die Patenterteilung: **09.11.2005**
(21) Anmeldenummer: 01129953.4
(22) Anmeldetag: 17.12.2001
(51) Int. Cl.: G02F 1/133

(54) **Beheizbare LCD-Anzeige**
Heatable liquid crystal display
Dispositif d'affichage à cristal liquide chauffable

(30) Priorität: 22.12.2000 DE 10064764; 09.01.2001 DE 10100672
(43) Veröffentlichungstag der Anmeldung: 26.06.2002
(73) Patentinhaber: SIEMENS AKTIENGESELLSCHAFT, 80333 München (DE)
(72) Erfinder: Brandt, Peter, 63739 Aschaffenburg (DE); Simon, Ernst-Ulrich, 61440 Oberursel/Ts. (DE)

(56) Entgegenhaltungen:
- EP-A- 0 024 483
- EP-A- 0 772 068
- US-A- 5 523 873
- US-A- 5 694 147

## Beschreibung

Die Erfindung bezieht sich auf eine beheizbare LCD-Anzeige, insbesondere in einem Kraftfahrzeug, mit mindestens zwei übereinander angeordneten Substraten, einem aktiven Bereich zur Informationsdarstellung, wobei auf der einen Seite eines der Substrate ein Flächenwiderstand aufgebracht ist, an den an gegenüberliegenden Rändern über Stromschienen eine steuerbare elektrische Spannung anlegbar ist, und mit einem Temperatursensor zum Ermitteln der Displaytemperatur im aktiven Bereich.

Eine LCD-Anzeige besteht aus zwei Substraten, üblicherweise Glasscheiben, zwischen denen eine elektrisch ansteuerbare Flüssigkristallschicht angeordnet ist. Der Aufbau der Schicht lässt eine segmentweise Ansteuerung der Schicht zu, so dass ein solches Display zum Anzeigen von Symbolen, Ziffern und Buchstaben geeignet ist.

Die Flüssigkristallschicht arbeitet aber nur in einem bestimmten Temperaturbereich optimal. Wenn z.B. niedrigere Temperaturen vorliegen, erfolgen die optischen Änderungen der Schicht, die letztlich die Anzeige bewirken, nach Anlegen einer Spannung nur äußerst verzögert. In allen Anwendungsbereichen, bei denen solche nicht optimalen Temperaturen auftreten und trotzdem eine rasch einstellbare, dynamische Anzeige notwendig ist, werden daher Displays eingesetzt, die zumindest die aktive Fläche, d.h. den ansteuerbaren Bereich der Flüssigkristallschicht aufheizen.

Da diese Schicht temperaturempfindlich ist, also bei zu hohen Temperaturen zerstört wird, erfolgt die Aufheizung gesteuert, wozu am Display ein Temperatursensor eingebaut ist. Bei den bisher verwendeten beheizbaren Displays war die Heizung lediglich unter dem aktiven Bereich des LCD angeordnet und der Temperatursensor derart entfernt davon, dass die Wärmeleitung zur aktiven Fläche besser war als.die zum Sensor. Die an dem Sensor gemessene Temperatur entsprach daher nicht der Temperatur der Flüssigkristallschicht, so dass für die Regelung der Heizung komplizierte Kompensationsmethoden notwendig waren, die letztlich zur Folge hatten, dass das LCD nicht im optimalen Temperaturbereich betrieben werden konnte

Des Weiteren sind aus einem Flächenwiderstand bestehende Heizungen bekannt, wobei dieser Widerstand als dünne Schicht auf eine der Glasscheiben der LCD-Anzeige aufgebracht wird. Auch hier beschränkte sich die Ausdehnung der Fläche auf den aktiven Bereich der Anzeige, so dass aus den oben genannten Gründen die Anzeigetemperatur nicht optimal eingestellt werden konnte.

Aus der Offenlegungsschrift EP0772068 ist eine ähnliche beheizbare LCD-Anzeige bekannt bei der darüber hinaus zwei Temperatursensoren unmittelbar mit dem Flächenwiderstand in Kontakt stehend, am Rande und im Zentrum des sichtbaren aktiven Bereichs, aufgebracht sind so daß die Anzeigetemperatur optimal über den gesamten sichtbaren aktiven Bereich eingestellt werden kann. Allerdings ist dabei die Displayqualität durch die sichtbaren Temperatursensoren beeinträchtigt.

Ein weiteres beheizbares Display, das die oben genannten Kompensationsmethoden zur Temperaturregelung erfordert und dem der Oberbegriff des Anspruchs 1entspricht, ist aus der Patentschrift US 5523873 bekannt.

Die Erfindung beruht somit auf dem Problem, eine heizbare LCD-Anzeige zu schaffen, bei der eine einfach arbeitende Heizungssteuerung realisiert werden kann, so dass die Anzeige auch bei einer niedrigen Umgebungstemperatur rasch auf eine optimale Arbeitstemperatür gebracht werden kann.

Dazu schlägt die Erfindung vor, dass der Flächenwiderstand seitlich über den aktiven Bereich hinausgeht und der Temperatursensor neben dem aktiven Bereich oberhalb des Flächenwiderstandes und im Wärmekontakt dazu angeordnet ist.

Dies hat zur Folge, dass der Temperatursensor in gleicher Weise wie der aktive Bereich der Flüssigkristallschicht aufgeheizt wird und damit die vom Sensor erfasste Temperatur stets der der Flüssigkristallschicht entspricht Mittels des Temperatursensors ist die Heizung, bei einer erfindungsgemäßen LCD Anzeige zudem nicht nur steuerbar, also z. B. bei Erreichen einer festgelegten Temperatur abschaltbar, sondern durch die exakte, zeitnahe Temperaturerfassung auch sinnvoll regelbar. Auf diese Weise können z. B. auch Einflüsse der Umgebungstemperatur mit berücksichtigt werden.

Am einfachsten lässt sich der Temperatursensor montieren, wenn sich oberhalb seiner Ambringstelle ein Freiraum neben einem der Substrate der LCD-Anzeige befindet.

Um diesen Freiraum zu realisieren, wird vorteilhaft das mit dem Flächenwiderstand versehene Substrat so in den Stapel der zur LCD-Anzeige gehönendem Substrate eingeordnet, dass es seitlich über mindestens ein weiteres Substrat der LCD-Anzeige hervorsteht, so dass der Temperatursensor oberhalb des überstehenden Teils des Substrats angebracht werden kann.

Im einfachsten Fall kann der Temperatursensor unmittelbar mit dem Flächenwiderstand in Kontakt gebracht werden. Auf diese Weise lässt sich die Temperatur sehr genau bestimmen.

Auf der anderen Seite ist dies aufgrund der Bauweise der LCD-Anzeige nicht immer möglich, so dass der Temperatursensor entfernt vom Flächenwiderstand angebracht werden muss. Vorteilhaft ist in diesem Fall aber dafür gesorgt, dass der Temperatursensor über einen durchgehend senkrecht zum Flächenwiderstand verlaufenden Wärmeleitpfad mit dem Flächenwiderstand in Wärmekontakt steht.

Dies ergibt nicht nur eine besonders platzsparende Bauweise, sondern hate in der Regel auch einen Wärmeleitpfad zur Folge, dessen Wärmeleitwiderstand dem des Wärmekontaktes zwischen dem Flächenwiderstand und dem aktiven Bereich der Flüssigkristallschicht entspricht.

In der Regel wird dieser Wärmeleitpfad von einem Substrat gebildet. Entweder ist dies das Substrat, auf dem der Flächenwiderstand aufgebracht ist, wobei der Temperatursensor auf der gegenüberliegenden Seitenfläche des Substrats angeordnet ist, oder es handelt sich um ein oder mehrere weitere Substrate, die auf dem Flächenwiderstand aufliegen.

Wie weiter oben schon erläutert, soll der Temperatursensor vorteilhaft in einem Freiraum angebracht werden. Dieser Freiraum kann vorzugsweise auch dazu genutzt werden, einen Treiber für die Flüssigkristallschicht in der LCD-Anzeige anzuordnen. Vorteilhaft wird dieser Treiber über eine flexible Leiterplatte mit Strom versorgt. Es wird daher weiterhin vorgeschlagen, vorzugsweise auch den Temperatursensor mit eben dieser Leiterbahn an die Steuerung anzuschließen.

Temperatursensoren, die einen NTC-Widerstand enthalten, haben sich für diesen Anwendungsbereich als besonders geeignet erwiesen.

Als Flächenwiderstand wird bevorzugt eine elektrisch leitende transparente Schicht auf eines der Substrate der LCD-Anzeige aufgebracht. Ein besonders geeigneter Werkstoff für diese Schicht ist Indium-Zinnoxid.

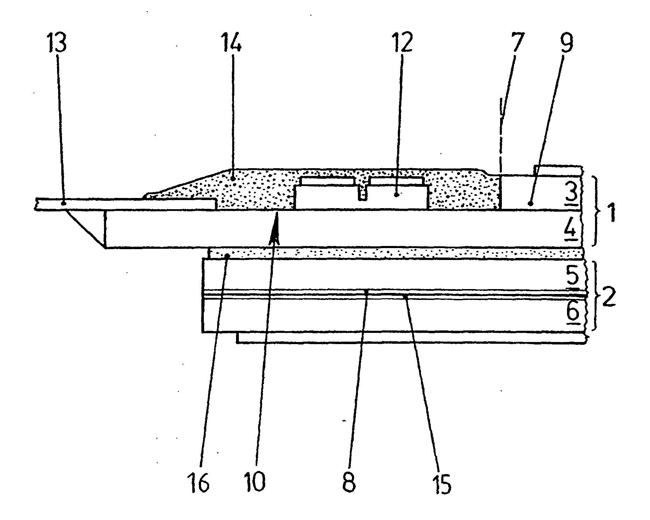

Im Folgenden soll die Erfindung dargestellt in einer einzigen Figur anhand eines Ausführungsbeispiels näher erläutert werden.

Das Bild zeigt den Randbereich einer DSTN Anzeige (Double Super Twisted Nematic Anzeige). Hierbei handelt es sich im Prinzip um zwei LCDs, die übereinander angeordnet sind, wobei jedes LCD aus zwei als Glasscheiben ausgebildeten Substraten besteht, zwischen denen die hier nicht dargestellte Flüssigkristallschicht angeordnet ist. Das obere LCD wird als aktives LCD 1 bezeichnet und das untere als passives LCD 2, wobei mit dem aktiven LCD 1 die eigentliche Anzeige erfolgt und mit dem passiven LCD 2 eine Farbkompensation (Verminderung bzw. Aufhebung von Farbverfälschungen) erfolgt.

Die DSTN-Anzeige weist somit vier Glasscheiben 3, 4, 5, 6 auf, wobei die beiden oberen Glasscheiben 3, 4 zum aktiven LCD 1 und die beiden unteren Glasscheiben 5, 6 zum passiven LCD 2 gehören. Die beiden LCDs 1, 2 sind mittels eines Klebers 16 miteinander verbunden.

Auf der Unterseite der oberen Glasscheibe 5 des passiven LCD 2 ist durchgehend eine ITO-Heizschicht 8 aufgebracht. ITO steht für Indium-Zinnoxid. Eine weitere Heizschicht 15 ist auf der Oberseite der unteren Glasscheibe 6 aufgebracht. Für die Funktion der Heizung ist das Vorsehen nur einer der Heizschichten 8, 15 jedoch hinreichend.

Jede dieser Schichten 8, 15 wird über zwei Stromschienen, die hier nicht näher dargestellt sind, an gegenüberliegenden Rändern mit Spannung versorgt. Der quer über die Schicht fließende Strom erhitzt die Schicht und heizt die Anzeige auf.

Die aktive Fläche 9 des aktiven LCD 1 wird durch die dargestellte Längskante 7 der oberen Glasscheibe 3 des aktiven LCD 1 begrenzt. Zumindest der ansteuerbare Bereich der Flüssigkristallschicht befindet sich lediglich zwischen der oberen Glasscheibe 3 und der unteren Glasscheibe 4 des aktiven LCD 1.

Die ITO-Heizschtichten 8, 15 führen aber über diese Längskante 7 hinaus, so dass von diesen ITO-Heizschichten 8 nicht nur der aktive Bereich 9 erwärmt wird, sondern auch die danebenliegenden Bereiche 10.

Im vorliegenden Fall ist ein Temperatursensor 12 nicht unmittelbar auf eine der ITO-Heizschichten 8, 15 aufgebracht, sondern im Abstand dazu unter Zwischenschaltung der unteren Glasscheibe 4 des aktiven LCD 1, welche Glasscheibe 4 zu diesem Zweck ebenfalls seitlich über die Längskante 7 hinausgeführt ist.

Der Wärmefluss durch die untere Glasscheibe 4 erfolgt damit nicht nur in dem aktiven Bereich des LCD 1, sondern auch im Seitenbereich, wo sich der Temperatursensor 12 befindet.

Der Temperatursensor 12 kann als Einzelbauteil ausgebildet sein, aber auch als integrierter Bestandteil des Treibers für die Flüssigkristallschicht. Die Stromversorgung des Treibers sowie die Verbindung des Temperatursensors 12 mit der Steuerung erfolgt über eine flexible Leiterplatte 13, die seitlich an die Anzeige herangeführt ist und auf der Oberseite der unteren Glasscheibe 1 des aktiven LCD 1 anliegt.

Zu einem sicheren Verbinden des Treibers, des Temperatursensors 12 sowie Teile der flexiblen Leiterbahn 13 sind diese Bauteile an dem Display in einer Vergussmasse 14 vergossen.

Wie schon in der Beschreibungseinleitung erwähnt, muss die ITO-Heizschicht 8 nicht unbedingt auf der Glasscheibe eines LCD angeordnet werden, vielmehr kann, was insbesondere dann der Fall ist, wenn die Anzeige nur aus einem LCD besteht, eine gesonderte zur Anzeige gehörige Glasscheibe vorgesehen werden, die lediglich dazu dient, die ITO-Heizschicht 8 zu tragen. Der Temperatursensor 12 muss auch keinesfalls auf gleicher Höhe der zu beheizenden Flüssigkristallschicht angeordnet sein. Entscheidend ist vielmehr, das der Wärmewiderstand des Wärmeleitpfades zwischen der ITO-Heizschicht 8 und dem Temperatursensor 12 in etwa dem des Wärmeleitpfades zwischen der zu beheizenden Flüssigkristallschicht und der ITO-Heizschicht 8 entspricht.

## Patentansprüche

1. Beheizbare LCD-Anzeige mit einer Flüssigkristallschicht, insbesondere in einem Kraftfahrzeug, mit zwei übereinander angeordneten Substraten (3,5), einem aktiven Bereich zur Informationsdarstellung (9), wobei auf der einen Seite eines der Substrate (5) ein Flächenwiderstand (8) aufgebracht ist, an den an gegenüberliegenden Rändern über Stromschienen eine steuerbare elektrische Spannung anlegbar ist, wobei das mit dem Flächenwiderstand (8) versehene Substrat (5) seitlich über das weitere Substrat (3) der LCD-Anzeige einen Freiraum neben dem weiteren Substrat (3) bildend hervorsteht, und der Flächenwiderstand (8) seitlich über den aktiven Bereich (9) hinausgeht, und mit einem Temperatursensor (12) zum Ermitteln der Displaytemperatur im aktiven Bereich (9), wobei der Temperatursensor (12) neben dem aktiven Bereich (9) oberhalb des Flächenwiderstandes (8) und im Wärmekontakt dazu angeordnet ist, **dadurch gekennzeichnet, dass** der Wärmekontakt des Temperatursensors (12) zu dem Flächenwiderstand (8) in der Weise ausgebildet ist, dass der Wärmewiderstand des Wärmeleitpfades zwischen dem Flächenwiderstand (8) und dem Temperatursensor (12) dem des Wärmeleitpfades zwischen der zu beheizenden Flüssigkristallschicht und dem Flächenwiderstand (8) entspricht und dass der Temperatursensor (12) oberhalb des überstehenden Teils des Substrats (5) in dem Freiraum angebracht ist.

2. LCD-Anzeige nach einem der Ansprüche 1, **dadurch gekennzeichnet, dass** der Temperatursensor (12) unmittelbar mit dem Flächenwiderstand (8) in Kontakt steht.

3. LCD-Anzeige nach einem der Ansprüche 1, **dadurch gekennzeichnet, dass** der Temperatursensor (12) über einen durchgehend senkrecht zum Flächenwiderstand (8) verlaufenden Wärmeleitpfad mit dem Flächenwiderstand (8) in Wärmekontakt steht.

4. LCD-Anzeige nach Anspruch 3, **dadurch gekennzeichnet, dass** der Temperatursensor (12) unter Zwischenlage des den Flächenwiderstand (8) tragenden Substrats (5) und/oder eines weiteren Substrats (4) der LCD-Anzeige mit dem Flächenwiderstand (8) in Wärmekontakt steht.

5. LCD-Anzeige nach einem der vorhergehenden Ansprüche, **dadurch gekennzeichnet, dass** der Temperatursensor (12) neben einem Treiber für die Flüssigkristallschicht der LCD-Anzeige angeordnet ist.

6. LCD-Anzeige nach Anspruch 5, **dadurch gekennzeichnet, dass** der Temperatursensor (12) an einer flexiblen Leiterplatte (13) für die Stromzuführung zum Treiber befestigt ist.

7. LCD-Anzeige nach einem der vorhergehenden Ansprüche, **dadurch gekennzeichnet, dass** der Temperatursensor (12) einen NTC-Widerstand aufweist.

8. LCD-Anzeige nach einem der vorhergehenden Ansprüche, **dadurch gekennzeichnet, dass** der Flächenwiderstand aus einer elektrisch leitenden transparenten Schicht (8) gebildet ist.

## Claims

1. Heatable LCD display with a liquid crystal layer, in particular in a motor vehicle, having two substrates (3, 5) arranged one above the other, an active area for the information display (9), with a surface resistor (8) being fitted on one face of one of the substrates (5), to which a controllable electrical voltage can be applied on opposite edges via busbars, with the substrate (5), which is provided with the surface resistor (8), projecting at the sides beyond the further substrate (3) of the LCD display, forming a free space alongside the further substrate (3), and the surface resistor (8) projecting at the sides beyond the active area (9), and having a temperature sensor (12) for determination of the display temperature in the active area (9), with the temperature sensor (12) being arranged alongside the active area (9), above the surface resistor (8) and in thermal contact with it, **characterized in that** the thermal contact of the temperature sensor (12) to the surface resistor (8) is designed in such a way that the thermal resistance of the thermal conductance path between the surface resistor (8) and the temperature sensor (12) corresponds to that of the thermally conductive path between the liquid crystal layer to be heated and the surface resistor (8), and **in that** the temperature sensor (12) is fitted in the free space above the projecting part of the substrate (5).

2. LCD display according to Claim 1, **characterized in that** the temperature sensor (12) makes direct contact with the surface resistor (8).

3. LCD display according to Claim 1, **characterized in that** the temperature sensor (12) makes thermal contact with the surface resistor (8) via a thermally conductive path which runs continuously at right angles to the surface resistor (8).

4. LCD display according to Claim 3, **characterized in that** the temperature sensor (12) makes thermal contact with the surface resistor (8) with the interposition of the substrate (5) to which the surface resistor (8) is fitted, and/or a further substrate (4) of the LCD display.

5. LCD display according to one of the preceding claims, **characterized in that** the temperature sensor (12) is arranged alongside a driver for the liquid crystal layer of the LCD display.

6. LCD display according to Claim 5, **characterized in that** the temperature sensor (12) is attached to a flexible printed circuit (13) for supplying electrical power to the driver.

7. LCD display according to one of the preceding claims, **characterized in that** the temperature sensor (12) has an NTC thermistor.

8. LCD display according to one of the preceding claims, **characterized in that** the surface resistor is formed from an electrically conductive transparent layer (8).

## Revendications

1. Afficheur à cristaux liquides et à chauffage incorporé, ayant une couche de cristaux liquides, notamment, dans un véhicule automobile, comportant au moins deux substrats (3, 5) disposés l'un au-dessus de l'autre, une partie active (9) destinée à la reproduction d'informations, où, sur l'un des côtés de l'un des substrats (5), est apportée une résistance en nappe (8), sur laquelle on peut brancher, sur des bords se faisant face, par l'intermédiaire de barres de courant, une tension électrique réglable le substrat (5) équipé de la résistance en nappe (8) dépassant latéralement au-dessus de l'autre substrat (3) de l'afficheur à cristaux liquides et formant un espace libre près de l'autre substrat (3) et la résistance en nappe (8) dépassant latéralement au-dessus de la partie active (9), et un capteur de température (12) permettant de déterminer la température de l'écran dans sa partie active (9), le capteur de température (12) étant disposé près de la partie active (9) au-dessus de la résistance en nappe (8) et en contact thermique avec elle, **caractérisé par le fait que** le contact thermique du capteur de température (12) avec la résistance en nappe (8) est conçu de telle manière que la résistance thermique du cheminement de conduction thermique entre la résistance en nappe (8) et le capteur de température (12) correspond à celui du cheminement de conduction thermique entre la couche de cristaux liquides à réchauffer et la résistance en nappe (8) et que le capteur de température (12) est placé dans l'espace libre au-dessus de la partie faisant saillie du substrat (5).

2. Afficheur à cristaux liquides selon la revendication 1 **caractérisé par le fait que** le capteur de température (12) est directement en contact avec la résistance en nappe (8).

3. Afficheur à cristaux liquides selon la revendication 1 **caractérisé par le fait que** le capteur de température (12) est en contact thermique avec la résistance en nappe (8) par l'intermédiaire d'un cheminement continu de conduction thermique perpendiculaire à la résistance en nappe (8).

4. Afficheur à cristaux liquides selon la revendication 3 **caractérisé par le fait que** le capteur de température (12) est en contact thermique avec la résistance en nappe (8) à travers le substrat (5) portant la résistance en nappe (8) et / ou un autre substrat (4) de l'afficheur à cristaux liquides.

5. Afficheur à cristaux liquides selon l'une des revendications précédentes **caractérisé par le fait que** le capteur de température (12) est disposé près d'un excitateur de la couche de cristaux liquides de l'afficheur à cristaux liquides.

6. Afficheur à cristaux liquides selon la revendication 5 **caractérisé par le fait que** le capteur de température (12) est fixé sur une carte souple à circuits imprimés (13) destinée à l'alimentation en courant de l'excitateur.

7. Afficheur à cristaux liquides selon l'une des revendications précédentes **caractérisé par le fait que** le capteur de température (12) comporte une thermistance (ou résistance NTC) .

8. Afficheur à cristaux liquides selon l'une des revendications précédentes **caractérisé par le fait que** la résistance en nappe est formée par une couche transparente (8) conduisant le courant électrique.
